# EUROPÄISCHE PATENTSCHRIFT

(11) **EP 3 544 083 B1**
(45) Veröffentlichungstag und Bekanntmachung des Hinweises auf die Patenterteilung: **14.06.2023**
(21) Anmeldenummer: 19162541.7
(22) Anmeldetag: 13.03.2019
(51) Int. Cl.: H01M 50/209, H01M 50/213, H01M 50/249

(54) **BATTERIEANORDNUNG ZUR LASTTRAGENDEN STRUKTURELLEN INTEGRATION VON BATTERIEN IN EIN FAHRZEUG**
BATTERY ASSEMBLY FOR LOAD BEARING STRUCTURAL INTEGRATION OF BATTERIES IN A VEHICLE
AGENCEMENT DE BATTERIE PERMETTANT L'INTÉGRATION STRUCTURELLE DES BATTERIES DANS UN VÉHICULE

(30) Priorität: 22.03.2018 DE 102018204420
(43) Veröffentlichungstag der Anmeldung: 25.09.2019
(73) Patentinhaber: Airbus Defence and Space GmbH, 82024 Taufkirchen (DE)
(72) Erfinder: Zimmermann, Kristian, 81249 München (DE); Dorn, Florian, 83623 Dietramszell (DE)
(74) Vertreter: Isarpatent

(56) Entgegenhaltungen:
- DE-B4-102015 214 185
- US-B1- 8 967 529
- DATABASE WPI Week 201712 Thomson Scientific, London, GB; AN 2017-00923S XP002792067, & CN 106 240 798 A (UNIV BEIHANG) 21. Dezember 2016 (2016-12-21)

## Beschreibung

Die vorliegende Erfindung betrifft eine Batterieanordnung zur lasttragenden strukturellen Integration von Batterien in ein Fahrzeug, insbesondere ein Luft- oder Raumfahrzeug.

Obwohl in vielfältigen Anwendungen einsetzbar, werden die vorliegende Erfindung sowie die ihr zugrunde liegende Problematik in Bezug auf Passagierflugzeuge näher erläutert. Die beschriebenen Verfahren und Vorrichtungen können jedoch ebenso in unterschiedlichen Fahrzeugen und in allen Bereichen der Transportindustrie, beispielsweise für Straßenfahrzeuge, für Schienenfahrzeuge, für Luftfahrzeuge oder für Wasserfahrzeuge eingesetzt werden.

Lithium-Ionen-Akkumulatoren sind als wiederaufladbare Energiespeicher in den unterschiedlichsten Bereichen der Technik anzutreffen. Insbesondere dienen sie bei der Elektromobilität als Energiespeicher für Elektroautos und Hybridfahrzeuge. Viele Hersteller implementieren hierzu eine Vielzahl von Batterien bzw. Batteriezellen in Form so genannter Batterie-Packs in eine Fahrzeugstruktur, z.B. eine Kraftfahrzeugkarosserie, siehe beispielsweise die Druckschriften US 8,833,499 B2 und DE 10 2015 214 185 B4. In einem derartigen Batterie-Pack bzw. Batteriesatz können durchaus mehrere Tausend Einzelzellen miteinander verbunden sein, z.B. Lithium-Ionen-Rundzellen mit einem Zylinderdurchmesser von etwa 20 mm und einer Länge von etwa 100 mm.

Die hierbei verfolgten generischen Integrationskonzepte sind jedoch nicht immer geeignet, um die technischen Anforderungen und Randbedingungen für Luftfahrzeuge in struktureller Hinsicht zu erfüllen. Zusätzliche Verstärkungsmaßnahmen wie beispielsweise ergänzende versteifende Strukturen würden unmittelbar das Gewicht und letztendlich somit den Treibstoffverbrauch vergrößern.

Um derartige Batterien möglichst effizient zu betreiben, ist es in typischen Anwendung unumgänglich, eine aktive Temperaturregelung der Batterien vorzusehen. Dies ist nicht zuletzt im Luft- und Raumfahrtbereich aufgrund der stark schwankenden Betriebs- bzw. Umgebungstemperaturen relevant. Für eine geeignete Temperierung der Batterien eines Batterie-Packs können beispielsweise Vorrichtungen wie Kühlplatten oder ähnlich zur Anwendung kommen, bei welchen eine Flüssigkeit und/oder ein Gas durch Fluidkanäle gespült wird, siehe beispielsweise die Druckschriften US 8,383,260 B2 und US 2017/0047624 A1. Derartige Kühlvorrichtungen vergrößern das Gewicht zusätzlich.

Die Druckschrift US 8 967 529 B1 beschreibt eine Batteriestruktur, welche sich zumindest teilweise in den Flügeln eines Flugzeugs befinden kann. Die Batteriestruktur bildet einen Teil der strukturellen Unterstützung der Flügel und umfasst eine Vielzahl von Batterieaufnahmefächern und eine Vielzahl von Batterien, die sich in der Batteriestruktur befinden. Die Batterien sind dazu ausgebildet, genau in die Batterieaufnahmefächer zu passen, wodurch die Steifigkeit der Batteriestruktur und der Flügel erhöht wird. Der Strukturbestandteil der Batteriestruktur kann aus einem kohlenstoff- oder graphitverstärkten Verbundmaterial oder aus einem Glasfaserverbundmaterial hergestellt werden. Die Batteriestruktur kann eine Oberseite, eine Unterseite, ein Paar Seitenwände und mehrere Stegelemente umfassen. Die Paneele und die Stegelemente können die Batterieaufnahmefächer definieren. Die Batterien können eng zwischen den Stegelementen aufgenommen werden, um die Steifigkeit und/oder Festigkeit der Batteriestruktur zu verstärken.

Vor diesem Hintergrund liegt der vorliegenden Erfindung die Aufgabe zugrunde, Lösungen für eine effiziente und leichtgewichtige Integration einer großen Anzahl von Batteriezellen in ein Fahrzeug zu finden.

Erfindungsgemäß wird diese Aufgabe gelöst durch eine Batterieanordnung mit den Merkmalen des Patentanspruchs 1 und durch ein Luft- oder Raumfahrzeug mit den Merkmalen des Patentanspruchs 13.

Demgemäß ist eine Batterieanordnung zur lasttragenden strukturellen Integration von Batterien in ein Fahrzeug vorgesehen. Die Batterieanordnung umfasst zwei Deckplatten mit Batteriehalterungen, und eine Vielzahl von Batterien, welche zwischen den Deckplatten beidseitig von den Batteriehalterungen gehalten werden, wobei die Batterien in Batteriereihen entlang der Deckplatten angeordnet sind, wobei die Batterien in den Batteriereihen jeweils unter einem Neigungswinkel bezüglich der Deckplatten zur Aufnahme und Weiterleitung von Lasten ausgerichtet sind, wobei der Neigungswinkel in den Batteriereihen positive und negative Werte aufweist. Der Betrag des Neigungswinkels weist Werte größer als 0° und kleiner als 90° auf.

Ferner ist ein Luft- und Raumfahrzeug mit einer erfindungsgemäßen Batterieanordnung vorgesehen.

Eine der vorliegenden Erfindung zugrunde liegende Idee besteht darin, eine Batterieanordnung, z.B. ein Batteriemodul oder ein Batteriepack, als lasttragendes Strukturelement auszubilden, welches nicht nur seine Eigenlast trägt, sondern ebenfalls entsprechend zu einem Strukturbauteil eingeleitete Fremdlasten aufnimmt und/oder weiterleitet, d.h. zur Bildung bzw. Verstärkung einer Gesamtstruktur eines Fahrzeugs beiträgt. Die Batterieanordnung kann somit existierende Strukturen gewissermaßen ersetzen, da Lasten durch die Batterieanordnung hindurch geleitet werden können. Zu diesem Zweck ist die erfindungsgemäße Batterieanordnung in einer Sandwich-Bauweise ausgebildet, in welcher eine Vielzahl von Batterien bzw. Batteriezellen zwischen zwei Deckplatten gehalten wird. Zug-, Druck- und/oder Scherkräfte können dabei direkt durch die Batterien bzw. Batteriezellen geleitet werden. Derart können zusätzliche strukturverstärkende Bauteile eingespart werden, was wiederum die Bauteilanzahl und letztendlich das Gewicht optimiert. Anders betrachtet kann mit diesen Maßnahmen die gewichtsabhängige Energie- bzw. Leistungsdichte einer Batterieanordnung bzw. eines Fahrzeugs verbessert werden. Um Scherkräfte aus unterschiedlichen Richtungen aufzunehmen, sind die Batterien hierbei gegenüber den Deckplatten sowohl mit positiven als auch negativen Neigungswinkeln ausgerichtet. Grundsätzlich umfassen Neigungswinkel im Sinne der Erfindung Winkel mit Beträgen zwischen größer als 0° und kleiner als 90°.

Ein negativer Neigungswinkel bedeutet in der vorliegenden Erfindung, dass Batterien bezogen auf ein feste Raumrichtung (z.B. eine Richtung entlang einer Batteriereihe) entgegengesetzt geneigt sind gegenüber Batterien mit positivem Neigungswinkel gleichen Betrages, wobei der Betrag des Neigungswinkels in diesem Fall größer als 0° und kleiner als 90° ist. Dies bedeutet, dass zumindest ein Anteil der Batterien in der vorliegenden Erfindung unter einem Neigungswinkel α = ±X mit 0° < |X| < 90° ausgerichtet ist. Dies schließt jedoch nicht aus, dass zumindest ein anderer Anteil der Batterien beispielsweise einen Neigungswinkel von 90° aufweist. Beispielsweise sind Batterien in einer ersten Batteriereihe unter einem Neigungswinkel von 45° ausgerichtet. Eine parallel verlaufende zweite Batteriereihe kann nun beispielsweise Batterien unter einem Neigungswinkel von - 45° aufweisen, d.h. die Batterien der zweiten Batteriereihe sind entgegengesetzt zu den Batterien der ersten Batteriereihe geneigt. In eine anderen Beispiel sind Batterien in einer ersten Batteriereihe unter einem Neigungswinkel von 45°, in einer zweiten Batteriereihe unter 90° und in einer dritten Batteriereihe unter -45° ausgerichtet. Grundsätzlich umfasst die Erfindung jedoch ebenso Ausführungen, in denen die Neigungswinkel der Batterien auch innerhalb der Batteriereihen variieren, z.B. unterschiedliche positive und/oder negative Werte aufweisen, um eine optimale Lastverteilung über die Batterien bzw. die Batterieanordnung zu erreichen. Die Batterien können in der vorliegenden Erfindung somit beispielsweise entlang der Lastpfade angeordnet werden, sodass insbesondere alle Lastrichtungen abgedeckt werden können. Anders ausgedrückt werden die Batterien bzw. Batteriezellen der vorliegenden Erfindung derart angeordnet und ausgerichtet, dass die Struktur der Batterieanordnung verstärkt bzw. versteift wird und Primärlasten von der Batterieanordnung optimal aufgenommen werden können.

Wie dem Fachmann unmittelbar klar sein wird, können Sandwich-Konstruktionen gemäß der Erfindung des Weiteren miteinander kombiniert werden, beispielsweise indem diese übereinandergeschichtet werden, um komplexe Strukturen mit einer Mehr- oder Vielzahl von Sandwichlagen zu schaffen.

Eine Batterie im Sinne der Erfindung ist ein allgemeines wiederaufladbares elektrisches Speicherelement. Hierbei kann es sich um eine Sekundärzelle handeln, d.h. ein einzelnes Speicherelement im Sinne eines Sekundärelements, einer Akkumulatorzelle, einer Akkuzelle, einer Batteriezelle oder dergleichen. Prinzipiell umfassen Batterien gemäß der Erfindung jedoch ebenso zusammengeschaltete Sekundärzellen und/oder zusammengeschaltete Speicherelemente, d.h. eine Batterie aus Sekundärzellen. Batterien im Sinne der Erfindung umfassen insbesondere Akkumulatoren, z.B. Lithium-Ionen-Akkumulatoren. Die Batteriehalterungen können insbesondere zur Aufnahme von zylinderförmigen Batterien bzw. Batteriezellen ausgebildet sein. Grundsätzlich sind jedoch ebenso Batterie- bzw. Zellvarianten mit anderen Geometrien vorgesehen, z.B. prismatische Batteriezellen, wobei die Batteriehalterungen entsprechend für die Aufnahme dieser Zelltypen bzw. Batterietypen ausgebildet sein können.

Vorteilhafte Ausgestaltungen und Weiterbildungen ergeben sich aus den weiteren Unteransprüchen sowie aus der Beschreibung unter Bezugnahme auf die Figuren.

Gemäß einer Weiterbildung kann der Neigungswinkel in aufeinanderfolgenden Batteriereihen alternierend positive und negative Werte aufweisen. Beispielsweise kann eine Vielzahl von Batteriereihen vorgesehen sein, welche im Wesentlichen parallel zueinander angeordnet sein können, wobei alle Batterien bzw. Batteriezellen pro Reihe abwechselnd jeweils mit einem positiven Neigungswinkel und mit einem negativen Neigungswinkel ausgerichtet sein können. Die sich ergebende Batterieanordnung ist somit nicht nur stabil gegenüber Drucklasten sondern ebenso gegenüber Scherlasten in unterschiedlichen Richtungen. Grundsätzlich umfasst die Erfindung jedoch ebenso Ausführungen, in denen die Batterien bzw. Batterieriehen alternierend und variierend positive und negative Werte aufweisen, d.h. die Batterien unter anderem auch innerhalb der Batteriereihen unterschiedliche positive und/oder negative Neigungswinkel aufweisen können.

Gemäß der Erfindung weist der Betrag des Neigungswinkels Werte größer als 0° und kleiner als 90° auf. Beispielsweise können alle Batterien der Batterieanordnung unter einem Neigungswinkel mit festem Betragswert ausgerichtet sein, z.B. 30°, 45°, 60° oder 70° usw. Prinzipiell können die Batterien einer Batterieanordnung jedoch ebenso unterschiedliche positive und/oder negative Werte für den Neigungswinkel aufweisen. Ferner ist es beispielsweise vorgesehen, dass die Batterien auch innerhalb einer einzelnen Batteriereihe unterschiedliche Neigungswinkel aufweisen können. Der Fachmann wird je nach Anwendungsfall vorteilhafte Ausrichtungen der Batterien bzw. der Batteriereihen wählen, um die Eigenschaften der Batterieanordnung unter Lasteinwirkung zu optimieren.

Gemäß einer Weiterbildung können die Batterien in jeweils einer Batteriereihe einen identischen Neigungswinkel aufweisen. Beispielsweise können alle Batterien einer Batteriereihe einen Neigungswinkel von ±30°, ±45°, ±60°, ±70° oder ±80° aufweisen.

Gemäß einer Weiterbildung kann der Betrag des Neigungswinkels 45° betragen. Beispielsweise können alternierende Batteriereihen vorgesehen sein, wobei alle Batterien einer Reihe jeweils einen Neigungswinkel von entweder 45° oder -45° aufweisen.

Gemäß einer Weiterbildung kann ein Anteil der Batterien in Zwischenbatteriereihen angeordnet sein. Die Zwischenbatteriereihen können sich zwischen den Batteriereihen befinden. Die Batterien können in den Zwischenbatteriereihen unter einem Neigungswinkel von 90° bezüglich der Deckplatten ausgerichtet sein. Beispielsweise kann eine sich wiederholende Anordnung aus drei Batteriereihen gewählt werden, wobei alle Batterien in einer erste Batteriereihe einen Neigungswinkel von 45°, in einer zweiten Batteriereihe einen Neigungswinkel von 90° und in einer dritten Batteriereihe einen Neigungswinkel von -45° aufweisen.

Gemäß einer Weiterbildung kann die Batterieanordnung weiterhin Scherwände aufweisen. Die Scherwände können die Deckplatten miteinander verbinden. Jeweils zwei Batteriereihen und/oder Zwischenbatteriereihen können von einer Scherwand getrennt werden. Die Scherwände können hierbei unterschiedlichen Zwecken dienen. Einerseits verstärken die Schwerwände die Gesamtstruktur der Batterieanordnung. Andererseits können die Schwerwände weitere funktionelle Zwecke erfüllen. In einem konkreten Beispiel können die Schwerwände bzw. ein Anteil der Scherwände als Schutzwände bzw. Sicherheitswände ausgebildet sein, z.B. als Brandschutzwände oder zur Vermeidung oder Einschränkung von thermischem Durchgehen. In einem Beispiel können die Scherwände zum Einschluss von eventuell in einem Schadensfall auftretenden Gasen oder Flüssigkeiten dienen. Alternativ oder zusätzlich können Scherwände als Kühlmittel bzw. thermischer Verteiler dienen, indem diese beispielsweise mit einem Material mit geeigneter Wärmeleitfähigkeit versehen werden bzw. aus einem derartigen Material gefertigt werden, z.B. einem Metallmaterial und/oder einem Phasenwechselmaterial (englisch: "phase change material") oder dergleichen.

Gemäß einer Weiterbildung können die Batterien beidseitig formschlüssig oder stoffschlüssig in den Batteriehalterungen gelagert sein. In einer derartigen Konfiguration können auftretende Zug-, Druck- und/oder Scherkräfte optimal aufgenommen und über die Batterien weitergeleitet werden.

Gemäß einer Weiterbildung können die Batterien zylinderförmig ausgebildet sein. Die Batteriehalterungen können zur Aufnahme von zylinderförmigen Batterien ausgebildet sein. Derart können beispielsweise bekannte und eventuell standardisierte Lithium-Ionen-Akkumulatoren vorgesehen sein. Alternativ oder zusätzlich können die Batterien prismatisch ausgebildet sein. Die Batteriehalterungen können entsprechend zur Aufnahme von prismatischen Batterien ausgebildet sein.

Gemäß einer Weiterbildung kann zumindest eine der Deckplatten als Kühlplatte ausgebildet sein. Beispielsweise können eine oder beide Deckplatten aus einem Metallmaterial mit hoher Wärmeleitfähigkeit ausgebildet sein. Gemäß einer Weiterbildung kann zumindest eine der Deckplatten als Wärmetauscher mit einer Vielzahl von Kühlrippen ausgebildet sein, um von den Batterien erzeugte Wärme nach außen hin abzuleiten. Alternativ oder zusätzlich können eine oder beide Deckplatten ein Phasenwechselmaterial aufweisen.

Gemäß einer Weiterbildung kann die Kühlplatte mit einer Vielzahl von Fluidkanälen ausgebildet sein. Beispielsweise kann die Kühlplatte integral aus einem Metallmaterial mit einer Vielzahl von Fluidkanälen gefertigt sein. Beispielsweise kann die Kühlplatte aus einem Metall, einer Metalllegierung, einem metallischen Material und/oder einer Kombination dieser Materialien gefertigt sein. In einem konkreten Beispiel ist die Kühlplatte aus Aluminium, einer Aluminiumlegierung und/oder einem aluminiumhaltigen Verbundmaterial gefertigt. Die Deckplatten bzw. Kühlplatten können zwecks Gewichtsreduzierung andererseits einen Kunststoff oder ein anderes leichtgewichtiges Material enthalten bzw. aus einem solchen gefertigt sein, z.B. einem thermoplastischen Kunststoff oder einem faserverstärkten Kunststoff wie kohlenstofffaserverstärktem Kunststoff (CFK). Beispielsweise kann zur Fertigung der Deckplatten bzw. Kühlplatten ein additives Verfahren verwendet werden, in welchem diese vollständig in integraler Weise gefertigt werden, ohne dass besonderer Aufwand, zusätzliche Montageschritte oder gar händische Arbeit notwendig wären. Grundsätzlich können die Deckplatten bzw. Kühlplatten aus sämtlichen Materialien oder Materialkombinationen gefertigt werden, für welche additive Verfahren bekannt sind. Die Dimensionierung der Fluidkanäle kann entsprechend vorteilhaft gewählt werden, um beispielsweise einen gewünschten Volumenfluss eines Fluids, z.B. ein Gas oder eine Flüssigkeit, zu ermöglichen. Darüber hinaus können Fluidkanäle als Ablasskanal dienen, um eventuell in einem Schadensfall auftretende Gase oder Flüssigkeiten abzuleiten.

Gemäß einer Weiterbildung kann die Batterieanordnung als lasttragendes Strukturbauteil für ein Luft- oder Raumfahrzeug ausgebildet sein. Des Weiteren kann die Batterieanordnung jedoch ebenso als nichtlasttragende Sekundärstruktur für ein Luft- oder Raumfahrzeug ausgebildet sein.

Gemäß einer Weiterbildung kann die Batterieanordnung als Seitenwand, Bodenplatte, Deckenplatte, Hautfeld, Flügelholm, Flügelrippe und/oder Flügelabdeckung oder dergleichen ausgebildet sein.

Gemäß einer Weiterbildung kann die Batterieanordnung einen tragenden Bestandteil eines lasttragenden Strukturbauteils des Luft- oder Raumfahrzeugs bilden. Beispielsweise kann die Batterieanordnung einen Rumpf- und/oder Tragflächenabschnitt eines Luft- oder Raumfahrzeugs bilden.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung, im Umfang der beiliegenden Ansprüche.

Insbesondere wird dabei der Fachmann auch Einzelaspekte als Verbesserungen oder Ergänzungen zu der jeweiligen Grundform der vorliegenden Erfindung hinzufügen.

Die vorliegende Erfindung wird nachfolgend anhand der in den schematischen Figuren angegebenen Ausführungsbeispiele näher erläutert. Es zeigen dabei:
- Fig. 1: schematische Seitenansicht einer Batterieanordnung gemäß einer Ausführungsform der Erfindung;
- Fig. 2: schematische Perspektivansicht einer Deckplatte der Batterieanordnung aus Fig. 1;
- Fig. 3: schematische Schnittansicht der Batterieanordnung aus Fig. 1, welche als lasttragendes Strukturbauteil verwendet wird;
- Fig. 4a, b, c: schematische Explosions-, Perspektiv- und Schnittansicht eines Flugzeugflügels mit Batterieanordnungen gemäß Fig. 1;
- Fig. 5: schematische Seitenansicht einer Batterieanordnung gemäß einer weiteren Ausführungsform der Erfindung; und
- Fig. 6: schematische Seitenansicht eines Luftfahrzeugs mit dem Flugzeugflügel aus Fig. 4a-c.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

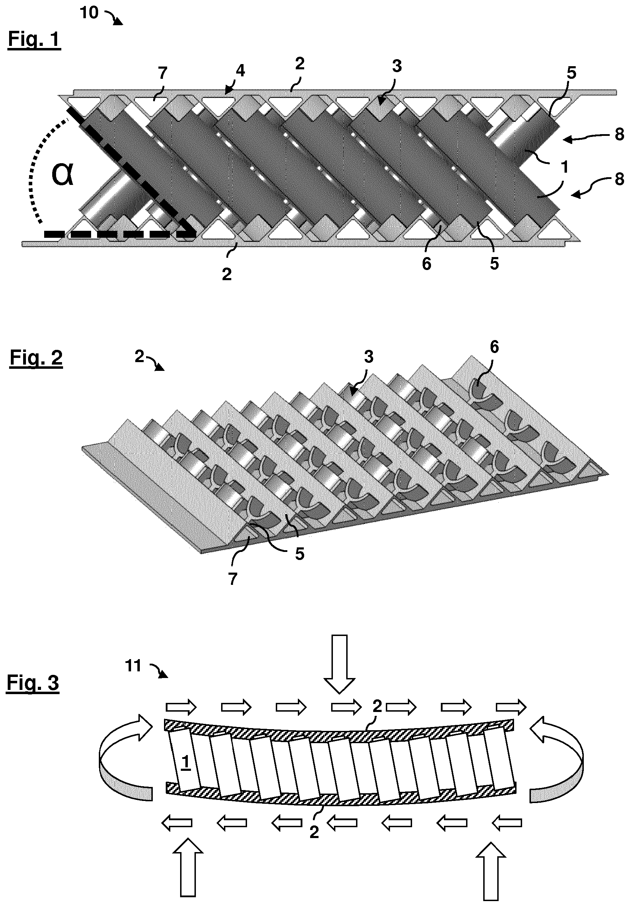

Figur 1 zeigt eine schematische Seitenansicht einer Batterieanordnung 10 gemäß einer Ausführungsform der Erfindung.

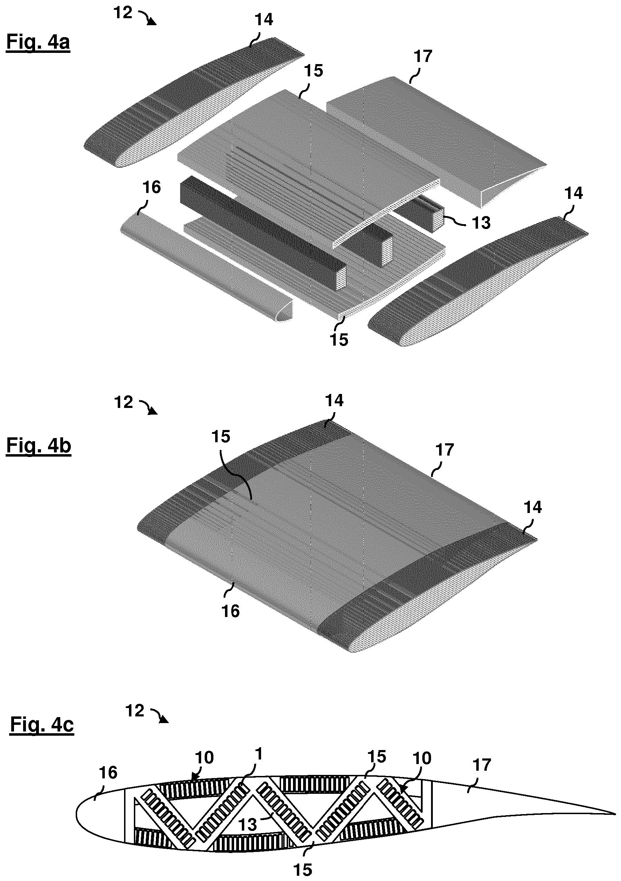

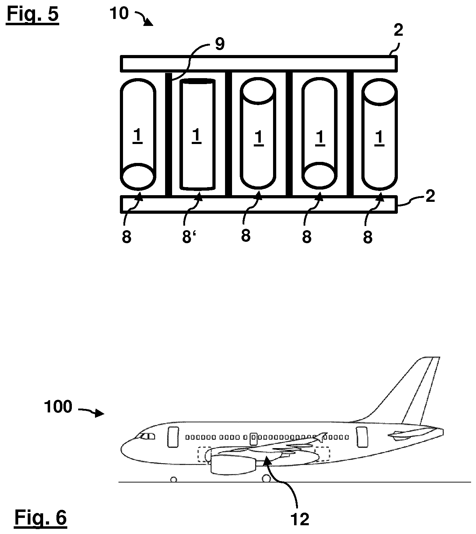

Die Batterieanordnung 10 dient der lasttragenden, strukturellen Integration von Batterien 1 in ein Fahrzeug, beispielsweise in die Tragfläche 12 eines Luftfahrzeugs 100 (z.B. ein Passagierflugzeug), wie es in Fig. 6 schematisch zu sehen ist (vgl. Fig. 4a-c). Wie mit Bezug auf Fig. 3 weiter unten erläutert wird, dient die Batterieanordnung 10 hierbei als lasttragendes Strukturbauteil, d.h. die Batterien 1 werden in diesem Sinne in die Primär- und/oder Sekundärstruktur des Fahrzeugs integriert. Anders ausgedrückt bilden die Batterien 1 einen tragenden Bestandteil der Struktur des Fahrzeugs. Die Batterieanordnung 10 kann beispielsweise ein Batteriemodul bzw. einen Batteriepack darstellen, wobei die Batterien 1 in diesem Fall Batteriezellen sind.

Die Batterieanordnung 10 umfasst zwei Deckplatten 2, wie sie beispielhaft in Fig. 2 zu sehen ist. Jede Deckplatte 2 ist mit einer Batteriehalterung 3 versehen, welche mit einer Vielzahl von Batterieaufnahmen 6 zur passgenauen, einseitigen Aufnahme jeweils einer zylinderförmigen Batterie 1 ausgebildet ist, z.B. von zylinderförmigen Lithium-Ionen-Akkumulatoren, wie sie aus dem Automobilbereich bekannt sind.

Ferner umfasst die Batterieanordnung 10 eine Vielzahl von Batterien 1 (bzw. Batteriezellen), welche zwischen den Deckplatten 2 beidseitig von den Batteriehalterungen 3 gehalten werden. Die Batterien 1 sind hierbei in nebeneinander liegenden Batteriereihen 8 entlang der Deckplatten 2 angeordnet, wobei die Batterien 1 in den Batteriereihen 8 jeweils unter einem Neigungswinkel α bezüglich der Deckplatten 2 zur Aufnahme und Weiterleitung von Lasten ausgerichtet sind. Der Neigungswinkel α beträgt in dem konkreten Beispiel der Fig. 1 ±45°, wobei die Batterien 1 in jeweils einer Batteriereihe 8 unter 45° und der jeweils nächstfolgenden Batteriereihe 8 unter -45° in entgegengesetzte Richtung zu den jeweils angrenzenden Batteriereihen 8 ausgerichtet sind (in Fig. 1 sind der Übersichtlichkeit halber lediglich zwei Batteriereihen 8 zu sehen, jedoch kann die weitere Anordnung aus der Verteilung der Batterieaufnahmen 6 in Fig. 2 entnommen werden).

Fig. 3 stellt schematisch dar, dass die Batterieanordnung 10 grundlegend einer Sandwich-Bauweise folgt, wobei die Deckplatten 2 einen (einlagigen) Kern aus Batterien 1 einschließen. Die Batterieanordnung 10 dient hierbei ähnlich wie Wandverkleidungen oder Bodenplatten in Sandwich-Bauweise als lasttragendes Strukturbauteil, welches sowohl Eigenlasten als auch eingeleitete Fremdlasten aufnimmt und/oder weiterleitet (vgl. Pfeile in Fig. 3). Die Batterieanordnung 10 kann somit existierende Strukturen eines Fahrzeugs ersetzen, da Lasten über die Deckplatten 2 und die Batterien 1 durch die Batterieanordnung 10 hindurch geleitet werden können. Zur Aufnahme von Scherkräften aus unterschiedlichen Richtungen sind die Batterien 1 hierbei gegenüber den Deckplatten 2 sowohl mit positiven als auch negativen Neigungswinkeln α ausgerichtet. Derart können zusätzliche strukturverstärkende Bauteile eingespart werden, was wiederum die Bauteilanzahl, das Gewicht und schlussendlich den Treibstoffverbrauch optimiert, d.h. die gewichtsabhängige Energie- bzw. Leistungsdichte des Luftfahrzeugs 100 wird verbessert.

Die Deckplatten 2 können beispielsweise aus einem Kunststoff wie einem Thermoplast, einem Metallmaterial, z.B. einer Aluminiumlegierung, oder einem faserverstärkten Verbundmaterial, z.B. CFK, gefertigt sein. Je nach Ausgestaltung können die Deckplatten 2 samt Batteriehalterungen 3 und Batterieaufnahmen 6 einteilig ausgebildet sein. Prinzipiell können die Deckplatten 2 weiterhin jeweils als Kühlplatte 4 ausgebildet sein und/oder eine Kühlplatte 4 aufweisen. Beispielsweise kann eine Vielzahl von Fluidkanälen 7 vorgesehen sein, welche jeweils integral mit der Kühlplatte 4 gefertigt sein können, z.B. aus einem Metallmaterial (vgl. Fig. 2). In der beispielhaften Ausführung von Fig. 1 und 2 laufen die Fluidkanäle 7 quer zu der Ausrichtung der einzelnen Batteriereihen 8. Dem Fachmann wird sich aufbauend auf der vorliegenden Lehre erschließen, dass alternative Konfigurationen der Deckplatte 2 möglich sind, in denen die Fluidkanäle 7 beispielsweise einen anderen Verlauf haben und/oder durch alternative Kühlmittel ergänzt oder ersetzt werden. Die Fluidkanäle 7 und die Batteriehalterung 3 bilden in dieser beispielhaften Ausführungsform ein Sägezahnprofil, welches in Richtung der Batteriereihen 8 verläuft.

Die konkrete elektrische Verschaltung und Verbindung der Batterien 1 kann in einer beliebigen dem Fachmann geläufigen Weise durchgeführt werden. Beispielsweise können Stromabnehmer 5 in Form von Stromschienen oder dergleichen sowie Signalleitungsschichten usw. in die Deckplatten 2 integriert sein, beispielsweise um Daten der Batterien 1 an ein Batteriemanagementsystem zu kommunizieren (hier nicht abgebildet). Beispielsweise können die Batterien 1 über die Signalleitungsschicht(en) kommunikativ mit einer zentralen Recheneinheit gekoppelt sein, wobei die Recheneinheit dazu ausgebildet sein kann, einen Zustand bzw. Status der zumindest einen Batterie zu überwachen, auszuwerten und gegebenenfalls zu regeln. Die Stromabnehmer 5 können vorteilhafterweise die mechanische Struktur der Batterieanordnung 10 weiter verstärken, z.B. in einer Ausführung aus einem Metallmaterial.

Die Batterien 1 können zumindest einseitig über eine elektrisch leitende Feder (nicht eingezeichnet) oder dergleichen mit den Stromabnehmern 5 gekoppelt sein, sodass ein Anschweißen der Batterien 1 an die Stromabnehmer 5 vermieden wird. Die Batterien 1 können in der Montage somit einfach in die Batteriehalterung 3 eingeschoben oder eingesteckt werden, wobei Toleranzen automatisch ausgeglichen werden.

Fig. 4 a-c zeigen eine beispielhafte Verwendung der Batterieanordnung 10 aus Fig. 1-3 in einem Flugzeugflügel 12, wobei Batterien 1 entsprechend Fig. 1-3 sowohl in die Flügelholme 13, die Flügelrippen 14 als auch die Flügelabdeckungen 15 gemäß Fig. 1 verbaut sind (vgl. Fig. 4c). Die Batterieanordnung 10 aus Fig. 1 kann grundsätzlich in relativ dünnen Sandwich-Schichten konfiguriert werden (zwei Deckschichten mit einer dazwischenliegenden Batterielage). Die Batterieanordnungen 10 bilden in diesem Sinne somit einen tragenden Bestandteil des Flugzeugflügels 12 und müssen nicht als separate Bauteile in das Luftfahrzeug 100 integriert werden.

Fig. 5 zeigt eine schematische Seitenansicht einer Batterieanordnung 10 gemäß einer weiteren Ausführungsform der Erfindung. Hierbei zeigt Fig. 5 die Batterieanordnung 10 quer zu der Richtung der Batteriereihen 8, welche alternierend positive und negative Neigungswinkel α aufweisen, z.B. ±45°. Darüber hinaus ist ein Anteil der Batterien 1 in Zwischenbatteriereihen 8' angeordnet (lediglich eine wird beispielhaft in Fig. 5 gezeigt), welche sich zwischen den Batteriereihen 8 befinden und in welchen die Batterien 1 unter einem Neigungswinkel α von 90° bezüglich der Deckplatten 2 ausgerichtet sind. Der Übersichtlichkeit halber werden die Batteriehalterungen 3 in der Figur nicht gezeigt. Diese können beispielsweise entsprechend zu jenen in Fig. 1-2 ausgebildet sein.

Weiterhin umfasst die Ausführung gemäß Fig. 5 eine Vielzahl von Scherwänden 9, welche die Deckplatten 2 miteinander verbinden und jeweils zwei Batteriereihen 8 voneinander trennen. Die Scherwände 9 dienen einerseits zur Strukturverstärkung der Batterieanordnung 10. Andererseits können die Scherwände 9 darüber hinaus als Schutzwände oder dergleichen, z.B. als Feuerschutzwände, ausgebildet sein. Beispielsweise könnten die Scherwände 9 die einzelnen Batteriereihen 8 bzw. Zwischenbatteriereihen 8' fluiddicht voneinander separieren, sodass sich in einem Schadenfall austretende Gase und/oder Flüssigkeiten nicht unkontrolliert ausbreiten können.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen und Modifikationen der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### Bezugszeichenliste

- 1: Batterie
- 2: Deckplatte
- 3: Batteriehalterung
- 4: Kühlplatte
- 5: Stromabnehmer/Stromschiene
- 6: Batterieaufnahme
- 7: Fluidkanal
- 8: Batteriereihe
- 8': Zwischenbatteriereihe
- 9: Scherwand
- 10: Batterieanordnung
- 11: Strukturbauteil
- 12: Flugzeugflügel/Tragfläche
- 13: Flügelholm
- 14: Flügelrippe
- 15: Flügelabdeckung
- 16: Flügelvorderkante
- 17: Flügelhinterkante
- 100: Luftfahrzeug
- α: Neigungswinkel

## Patentansprüche

1. Batterieanordnung (10) zur lasttragenden strukturellen Integration von Batterien (1) in ein Fahrzeug, insbesondere ein Luft- oder Raumfahrzeug (100), mit:
zwei Deckplatten (2) mit Batteriehalterungen (3); und
einer Vielzahl von Batterien (1), welche zwischen den Deckplatten (2) beidseitig von den Batteriehalterungen (3) gehalten werden, wobei die Batterien (1) in Batteriereihen (8) entlang der Deckplatten (2) angeordnet sind, wobei die Batterien (1) in den Batteriereihen (8) jeweils unter einem Neigungswinkel (α) bezüglich der Deckplatten (2) zur Aufnahme und Weiterleitung von Lasten ausgerichtet sind, wobei der Neigungswinkel (α) in den Batteriereihen (8) positive und negative Werte aufweist, wobei der Betrag des Neigungswinkels (α) Werte größer als 0° und kleiner als 90° aufweist.

2. Batterieanordnung (10) nach Anspruch 1, wobei der Neigungswinkel (α) in aufeinanderfolgenden Batteriereihen (8) alternierend positive und negative Werte aufweist.

3. Batterieanordnung (10) nach einem der Ansprüche 1 und 2, wobei die Batterien (1) in jeweils einer Batteriereihe (8) einen identischen Neigungswinkel (α) aufweisen.

4. Batterieanordnung (10) nach Anspruch 3, wobei der Betrag des Neigungswinkels (α) 45° beträgt.

5. Batterieanordnung (10) nach einem der Ansprüche 1 bis 4, wobei ein Anteil der Batterien (1) in Zwischenbatteriereihen (8') angeordnet ist, welche sich zwischen den Batteriereihen (8) befinden und in welchen die Batterien (1) unter einem Neigungswinkel (α) von 90° bezüglich der Deckplatten (2) ausgerichtet sind.

6. Batterieanordnung (10) nach einem der Ansprüche 1 bis 5, weiterhin mit: Scherwänden (9), welche die Deckplatten (2) miteinander verbinden, wobei jeweils zwei Batteriereihen (8) von einer Scherwand (9) getrennt werden, wobei die Scherwände (9) insbesondere jeweils als zumindest eines von thermischer Verteiler und Sicherheitswand ausgebildet sind.

7. Batterieanordnung (10) nach einem der Ansprüche 1 bis 6, wobei die Batterien (1) beidseitig formschlüssig oder stoffschlüssig in den Batteriehalterungen (3) gelagert sind.

8. Batterieanordnung (10) nach einem der Ansprüche 1 bis 7, wobei die Batterien (1) zylinderförmig oder prismatisch und die Batteriehalterungen (3) zur Aufnahme von zylinderförmigen oder prismatischen Batterien (1) ausgebildet sind.

9. Batterieanordnung (10) nach einem der Ansprüche 1 bis 8, wobei zumindest eine der Deckplatten (2) als Kühlplatte (4) ausgebildet ist.

10. Batterieanordnung (10) nach Anspruch 9, wobei die Kühlplatte (4) mit einer Vielzahl von Fluidkanälen (7) ausgebildet ist.

11. Batterieanordnung (10) nach einem der Ansprüche 1 bis 10, wobei die Batterieanordnung (10) als lasttragendes Strukturbauteil (11) für ein Luft- oder Raumfahrzeug (100) ausgebildet ist.

12. Batterieanordnung (10) nach Anspruch 11, wobei die Batterieanordnung (10) als zumindest eines von Seitenwand, Bodenplatte, Deckenplatte, Hautfeld, Flügelholm (13), Flügelrippe (14) und Flügelabdeckung (15) ausgebildet ist.

13. Luft- oder Raumfahrzeug (100) mit einer Batterieanordnung (10) nach einem der Ansprüche 1 bis 12.

14. Luft- oder Raumfahrzeug (100) nach Anspruch 13, wobei die Batterieanordnung (10) einen tragenden Bestandteil eines lasttragenden Strukturbauteils (11) des Luft- oder Raumfahrzeugs (100) bildet.

## Claims

1. Battery arrangement (10) for the load-bearing structural integration of batteries (1) into a vehicle, especially an aircraft or spacecraft (100), having:
two cover plates (2) having battery holders (3); and
a multiplicity of batteries (1), which are held on both sides between the cover plates (2) by the battery holders (3), wherein the batteries (1) are arranged in battery rows (8) along the cover plates (2), wherein the batteries (1) in the battery rows (8) are each aligned at a slope angle (α) relative to the cover plates (2) in order to absorb and transmit loads, wherein the slope angle (α) in the battery rows (8) has positive and negative values, wherein the magnitude of the slope angle (α) has values greater than 0° and less than 90°.

2. Battery arrangement (10) according to Claim 1, wherein the slope angle (α) in successive battery rows (8) alternately has positive and negative values.

3. Battery arrangement (10) according to either of Claims 1 and 2, wherein the batteries (1) in each battery row (8) have an identical slope angle (α).

4. Battery arrangement (10) according to Claim 3, wherein the magnitude of the slope angle (α) is 45°.

5. Battery arrangement (10) according to any one of Claims 1 to 4, wherein a proportion of the batteries (1) is arranged in intermediate battery rows (8'), which are situated between the battery rows (8) and in which the batteries (1) are aligned at a slope angle (α) of 90° relative to the cover plates (2).

6. Battery arrangement (10) according to any one of Claims 1 to 5, furthermore having:
shear walls (9), which connect the cover plates (2) to each other, wherein two battery rows (8) in each case are separated by one shear wall (9), wherein, in particular, the shear walls (9) are each designed as at least one of the group comprising a thermal distributor and a safety wall.

7. Battery arrangement (10) according to any one of Claims 1 to 6, wherein the batteries (1) are mounted on both sides positively or in a materially integral manner in the battery holders (3).

8. Battery arrangement (10) according to any one of Claims 1 to 7, wherein the batteries (1) are of cylindrical or prismatic design and the battery holders (3) are designed to receive cylindrical or prismatic batteries (1).

9. Battery arrangement (10) according to any one of Claims 1 to 8, wherein at least one of the cover plates (2) is designed as a cooling plate (4).

10. Battery arrangement (10) according to Claim 9, wherein the cooling plate (4) is formed with a multiplicity of fluid channels (7).

11. Battery arrangement (10) according to any one of Claims 1 to 10, wherein the battery arrangement (10) is designed as a load-bearing structural component (11) for an aircraft or spacecraft (100).

12. Battery arrangement (10) according to Claim 11, wherein the battery arrangement (10) is designed as at least one of the group comprising a side wall, floor panel, ceiling panel, skin area, wing spar (13), wing rib (14) and wing covering (15).

13. Aircraft or spacecraft (100) having a battery arrangement (10) according to any one of Claims 1 to 12.

14. Aircraft or spacecraft (100) according to Claim 13, wherein the battery arrangement (10) forms a load-bearing constituent of a load-bearing structural component (11) of the aircraft or spacecraft (100).

## Revendications

1. Agencement de batteries (10) pour l'intégration structurelle porteuse de charge de batteries (1) dans un véhicule, notamment un véhicule aérien ou spatial (100), avec :
deux plaques de recouvrement (2) avec des supports de batterie (3) ; et
une pluralité de batteries (1) qui sont maintenues entre les plaques de recouvrement (2) des deux côtés par les supports de batterie (3), les batteries (1) étant agencées en rangées de batteries (8) le long des plaques de recouvrement (2), les batteries (1) dans les rangées de batteries (8) étant respectivement orientées selon un angle d'inclinaison (α) par rapport aux plaques de recouvrement (2) pour recevoir et transmettre des charges, l'angle d'inclinaison (α) dans les rangées de batteries (8) présentant des valeurs positives et négatives, le montant de l'angle d'inclinaison (α) présentant des valeurs supérieures à 0° et inférieures à 90° .

2. Agencement de batteries (10) selon la revendication 1, dans lequel l'angle d'inclinaison (α) dans des rangées de batteries (8) successives présente alternativement des valeurs positives et négatives.

3. Agencement de batteries (10) selon l'une quelconque des revendications 1 et 2, dans lequel les batteries (1) dans une rangée de batteries (8) respective présentent un angle d'inclinaison (α) identique.

4. Agencement de batteries (10) selon la revendication 3, dans lequel le montant de l'angle d'inclinaison (e) est de 45°.

5. Agencement de batteries (10) selon l'une quelconque des revendications 1 à 4, dans lequel une partie des batteries (1) est agencée dans des rangées de batteries intermédiaires (8') qui se trouvent entre les rangées de batteries (8) et dans lesquelles les batteries (1) sont orientées selon un angle d'inclinaison (α) de 90° par rapport aux plaques de recouvrement (2).

6. Agencement de batteries (10) selon l'une quelconque des revendications 1 à 5, avec en outre :
des parois de cisaillement (9) qui relient les plaques de recouvrement (2) entre elles, deux rangées de batteries (8) étant respectivement séparées par une paroi de cisaillement (9), les parois de cisaillement (9) étant notamment configurée respectivement sous la forme d'au moins un élément parmi un répartiteur thermique et une paroi de sécurité.

7. Agencement de batteries (10) selon l'une quelconque des revendications 1 à 6, dans lequel les batteries (1) sont montées des deux côtés dans les supports de batterie (3) par complémentarité de forme ou liaison de matière.

8. Agencement de batteries (10) selon l'une quelconque des revendications 1 à 7, dans lequel les batteries (1) sont configurées sous forme cylindrique ou prismatique et les supports de batterie (3) sont configurés pour recevoir des batteries (1) de forme cylindrique ou prismatique.

9. Agencement de batteries (10) selon l'une quelconque des revendications 1 à 8, dans lequel au moins l'une des plaques de recouvrement (2) est configurée sous forme de plaque de refroidissement (4).

10. Agencement de batteries (10) selon la revendication 9, dans lequel la plaque de refroidissement (4) est configurée avec une pluralité de canaux de fluide (7).

11. Agencement de batteries (10) selon l'une quelconque des revendications 1 à 10, dans lequel l'agencement de batteries (10) est configuré sous forme de composant structurel porteur de charge (11) pour un véhicule aérien ou spatial (100).

12. Agencement de batteries (10) selon la revendication 11, dans lequel l'agencement de batteries (10) est configuré sous la forme d'au moins un élément parmi une paroi latérale, une plaque de fond, une plaque de plafond, un panneau de peau, un longeron d'aile (13), une nervure d'aile (14) et un couvercle d'aile (15).

13. Véhicule aérien ou spatial (100) avec un agencement de batteries (10) selon l'une quelconque des revendications 1 à 12.

14. Véhicule aérien ou spatial (100) selon la revendication 13, dans lequel l'agencement de batteries (10) forme un constituant porteur d'un composant structurel porteur de charge (11) du véhicule aérien ou spatial (100).
